# EUROPÄISCHE PATENTSCHRIFT

(11) **EP 2 131 256 B1**
(45) Veröffentlichungstag und Bekanntmachung des Hinweises auf die Patenterteilung: **30.05.2012**
(21) Anmeldenummer: 08157593.8
(22) Anmeldetag: 04.06.2008
(51) Int. Cl.: G05B 19/418, H04L 12/66

(54) **Ermitteln von Telegrammlängen**
Determining datagram lengths
Estimation des longitudes des datagrammes

(43) Veröffentlichungstag der Anmeldung: 09.12.2009
(73) Patentinhaber: VEGA Grieshaber KG, 77709 Wolfach (DE)
(72) Erfinder: Faist, Fridolin, 77709, Oberwolfach (DE); Isenmann, Andreas, 77716, Haslach i.K. (DE)
(74) Vertreter: Maiwald Patentanwalts GmbH

(56) Entgegenhaltungen:
- US-A1- 2003 076 850
- US-A1- 2007 250 180
- US-A1- 2008 112 388
- US-A1- 2008 123 541
- ANONYMOUS: "FDT/DTM" INTERNET CITATION, [Online] XP002254703 Gefunden im Internet: URL:http://www.profibus.com/imperia/md/con tent/pisc/brochures/FDT-DTM-Bro chure2001-d.pdf> [gefunden am 2003-09-16]

## Beschreibung

Die Erfindung betrifft das Gebiet der Messtechnik. Insbesondere betrifft die vorliegende Erfindung ein Verfahren zum Ermitteln einer Telegrammlänge, ein Programmelement zum Ermitteln einer Telegrammtänge, ein Verfahren zum Antworten auf das Empfangen eines Telegramms, ein Programmelement zum Antworten auf das Empfangen eines Telegramms, eine Bedienvorrichtung, ein Feldgerät und ein System zum Ermitteln einer Telegrammlänge.

Messgeräte, insbesondere ein Feldgerät beispielsweise ein Sensor oder ein Aktor, weisen in der Regel zur Bedienung eigene Bedieneinrichtungen auf. Diese Bedieneinrichtungen weisen oft eine Anzeigeeinrichtung in der Form einer LCD Anzeige (Liquid Crystal Display) und eine Vielzahl von Tastern oder Schaltern auf. Mittels einer Bedieneinrichtung, welche als Mensch-Maschine-Schnittstelle dient oder mittels einer Ein-/Ausgabegabeeinrichtung, ermöglicht das Feldgerät einem Nutzer, Bediener oder Anwender, das Feldgerät zu beobachten, zu bedienen, zu konfigurieren oder zu parametrieren.

Bei der industriellen Fertigung in einem Produktionsbetrieb, bei der an verschiedenen Stellen im Produktionsablauf ein Sensor abgefragt oder ein Aktor eingestellt werden muss, kann es erforderlich sein, eine Vielzahl von Feldgeräten verteilt über den Produktionsbetrieb einzusetzen. Die Bedienung dieser Vielzahl an Messeinrichtungen kann sich jedoch als schwierig erweisen, da eine Bedienung mit den von der Messeinrichtung bereitgestellten Bedieneinrichtungen oft nur lokal an der Messeinrichtung erfolgen kann.

Um eine lokale Bedienung zu vermeiden, kommt in großen Produktionsstätten eine zentrale Warte zum Einsatz, von der aus eine Messeinrichtung oder ein Feldgerät gesteuert werden kann, welches sich an einem entfernten Einsatzort befindet. Ebenso kann ein Messwert, der von der entfernten Messeinrichtung ermittelt wird, in der zentralen Warte angezeigt werden.

Um eine Vielzahl von Feldgeräte von einer zentralen Warte aus zu bedienen, wurden Bedientools oder Bedienwerkzeuge entwickelt, die unter einer gemeinsamen Bedienoberfläche den Zugriff auf die unterschiedlichen Feldgeräte ermöglichen. Die Bedientools stellen eine Architektur, einen Rahmen oder einen Frame zur Verfügung, der beispielsweise für ein einheitliches Erscheinungsbild von Anzeigen und Bedienelementen von Feldgeräten sorgt. Durch das einheitliche Erscheinungsbild kann die Bedienung der Feldgeräte vereinfacht werden. Die Bedienoberfläche mag die Bedieneinrichtung simulieren können.

Zur Integration eines Feldgerätes in ein Bedientool ist eine Beschreibung der Bedienoberfläche des jeweiligen Feldgeräts nötig. Die Bedienoberfläche wird in der Regel für jedes Feldgerät individuell erstellt. In der Bedienoberfläche sind Geräteparameter, d.h. die Gerätebeschreibung, in einer Beschreibungssprache beschrieben, so dass die Parameter von dem Bedientool interpretiert werden können. Weil die Beschreibungssprache für die jeweilige Bedientoolarchitektur standardisiert ist, ist es möglich, die Bedienung von Feldgeräten unterschiedlicher Hersteller unter dem gemeinsamen Bedientool zusammenzuführen.

Das gemeinsame Bedientool kann als übergreifendes Managementsystem eine Bedienung der Feldgeräte unabhängig von dem Feldgerätehersteller ermöglichen. Das übergreifende Managementsystem oder Bedientool kann genutzt werden, um beispielsweise eine Verbindung zwischen einzelnen Sensoren untereinander darzustellen, und einen Überblick über eine Verteilung der Feldgeräte innerhalb des Produktionsbetriebes zu ermöglichen. Beispiele für Bedientools sind Emerson AMS, Siemens PDM oder PACTware™.

Zur Integration von Feldgeräten unterschiedlicher Hersteller in das Bedientool wird von dem jeweiligen Hersteller des Feldgeräts eine für das entsprechende Feldgerät angepasste Bedienoberfläche in der Form einer Datei bereitgestellt. Als Architektur für die Bedientools haben sich unterschiedliche Technologien oder Technologiekonzepte etabliert, denen bei der Erstellung von Bedienoberflächen für das jeweilige Bedientool mittels der Beschreibungssprachen Rechnung getragen werden muss. Die Verfügbarkeit einer Bedienoberfläche für das bei einem Anwender vorhandene Bedientool kann für die Kaufentscheidung über ein Feldgerät von Bedeutung sein.

Beispielsweise gibt es das Field Device Tool (FDT) System mit Device Type Managern (DTM). Bei der FDT Technologie werden binäre Files als eine Bedienoberflächenbeschreibungsdatei genutzt, um die Bedienoberfläche des zugehörigen Feldgeräts zu beschreiben. Die Bedienoberflächenbeschreibungsdatei (DTM) ist mit der sogenannten FDT-Schnittstelle ausgestattet und wird in das verwendete Bedientool (auch Rahmenapplikation oder Frame genannt) eingelesen, um über das Bedientool das Feldgerät ansprechen zu können. Die FDT-Schnittstelle definiert dabei den Verbindungskanal zwischen Rahmenapplikation (z.B. PACTware^{™}) und DTM.

Ein anderes Konzept wird mittels des Device Description (DD) Konzepts, des Electronic Device Description (EDD) Konzepts bzw. des Enhanced EDD (EEDD) Konzepts verfolgt. Bei DD, EDD oder EEDD wird die Bedienoberfläche oder die Gerätebeschreibung in einem ASCII Text bereitgestellt, der unter Verwendung einer Beschreibungssprache geschrieben ist, die in Teilen der Programmiersprache C vergleichbar ist. Daher handelt es sich bei der Bedienoberflächenbeschreibungsdatei um eine Textdatei.

Die Gerätebeschreibung des Feldgeräts, die entweder als binäres File oder als ASCII File bereitgestellt wird, dient nach dem Einlesen in das zugehörige Bedientool der Darstellung des Feldgerätes in einer Bedienoberfläche innerhalb des Bedientools oder innerhalb der Bedientoolumgebung. Über die für das Feldgerät in dem Bedientool erzeugte Oberfläche kann das Feldgerät über das einheitliche Bedientool angesprochen werden.

Da es jedoch die beiden unterschiedlichen Technologieansätze mittels binärem File und mittels ASCII File gibt, ist es für die Hersteller von Feldgeräten nötig, für jedes Bedienoberflächenkonzept eine eigene Gerätebeschreibung für jedes einzelne Feldgerät zu entwickeln. Jede Technologie verfügt über unterschiedliche Entwicklungsumgebungen, die ihrerseits individuelle Gerätebeschreibungen erfordern. Ein Gerätehersteller wird dazu benötigt, mehrere Gerätebeschreibungen für das selbe Feldgerät bereitzustellen.

Es gibt zwar Konvertierungstools, die automatisch eine auf Basis der EDD Technologie vorhandene Gerätebeschreibung in einen DTM auf Basis der FDT Technologie überführt. Da jede Technologie aber ihre eigene Gerätebeschreibung in der Form einer Bedienoberflächenbeschreibungsdatei erfordert, müssen die im Gerät vorhandenen Parameter und Funktionen mehrfach und auf unterschiedliche weise beschrieben werden. Diese unterschiedliche Beschreibung erfordert nicht nur einen enormen Zeit- und Kostenaufwand, sondern sie birgt auch die Gefahr in sich, fehlerhafte oder inkonsistente Bedienoberflächen in den unterschiedlichen Bedientools bereitzustellen.

Ferner ist ein hoher Wartungsaufwand nötig, wenn in einem Feldgerät oder Gerät beispielsweise Funktionserweiterungen oder Erweiterungen der Parameter vorgenommen werden, da diese Änderungen auch in jede Bedienoberfläche eingebracht werden müssen.

Jede Technologie bietet zur Gestaltung der Bedienoberfläche unterschiedliche Möglichkeiten. Bei der automatischen Konvertierung kann aber nur die gemeinsam verfügbare Funktionalität genutzt werden. Da die EDD und FDT/DTM Technologie unterschiedliche Parameter oder Funktionen nutzen, kann nur die Schnittmenge der gemeinsam vorhandenen Parameter von der einen Gerätebeschreibungstechnologie in die andere Gerätebeschreibungstechnologie konvertiert werden. So kommt es beispielsweise vor, dass DTMs, die mittels Konvertierungstools generiert werden, die technischen Möglichkeiten der FDT Technologie nicht ausschöpfen können, da die Funktionen oder Parameter, nicht in der EDD Technologie vorhanden sind.

Die Prozessautomatisierungstechnik soll dazu dienen einen industriellen Prozess steuern zu können und überwachen zu können. Bedientools können einen Überblick Über einzelne Zustände des Prozesses liefern, wodurch die Überwachung des industriellen Prozesses erleichtert wird. Insbesondere kommen zur Überwachung eines solchen industriellen Prozesses, beispielsweise eines Herstellungsprozesses oder eines Umwandlungsprozesses, Feldgeräte zum Einsatz.

Feldgeräte können als Sensoren der Erfassung von Prozessvariablen dienen. Beispiele für übliche Prozessvariablen die beim Überwachen eines Prozesses erfasst werden sind physikalische Größen wie ein Füllstand in einem Behälter, ein Druck in einem Behälter und eine Durchflussgeschwindigkeit eines Mediums durch ein Rohr. Zur Erfassung und insbesondere zur Messung der Prozessvariablen werden Sensoren eingesetzt. Beispiele für Sensoren sind Füllstandsmesser, Durchflussmesser, Grenzstandsmesser, Druckmesser, Temperaturmesser usw.

Feldgeräte können als Aktoren Prozessvariablen, d.h. physikalische Größen, beeinflussen. Aktoren können einen Steuer-Prozess oder Regel-Prozess unterstützen. Z.B. kann ein Aktor den Öffnungswinkel eines Ventils zur Steuerung einer Durchflussmenge in einem Rohr beeinflussen. Beispiele für Aktoren sind Ventile oder ein Ausschalter.

Bei der digitalen Kommunikation in prozessverarbeitenden Systemen oder in Feldgerätesystemen, werden vermehrt Feldgeräte und Kommunikationskomponenten unterschiedlicher Hersteller miteinander vernetzt. In einem solchen vernetzten System weisen oftmals die Kommunikationskomponenten der unterschiedlichen Hersteller auch unterschiedliche Leistungsmerkmale auf.

Eine Zusammenschaltung mehrerer Kommunikationskomponenten zu einem prozessverarbeitenden System kann als verschachtelte oder Nested-Kommunikationsstruktur bezeichnet werden. In solchen Feldgerätesystemen werden die Feldgeräte mittels eines angeschlossenem Bedientool bedient.

Das Bedientool, von dem es auch mehrere Instanzen in einer großen Systemanordnung geben kann, kann über die verschachtelte Kommunikationsstruktur mit einem Feldgerät, insbesondere mit einem Sensor und/oder einem Aktor kommunizieren. Zum Kommunizieren zwischen dem Bedientool und einem Feldgerät mag ein Telegramm, ein Paket, eine Nachricht oder eine Message eingesetzt werden. Ein solches Telegramm mag eine feste Telegrammlänge aufweisen, wobei die Telegrammlänge von den Kommunikationskomponenten bestimmt werden mag, welche Komponenten in dem einem Feldgerätesystem angeordnet sind. Daher mag in einem Feldgerätesystem, d.h. in einem Zusammenschluss von Feldgeräten, eine obere Schranke für den Wert der Telegrammlänge existieren, wobei die Telegrammlänge von der Komponente bestimmt werden mag, welche die geringste Länge für ein Telegramm zulässt bzw. verarbeiten kann.

Wird die maximal mögliche Telegrammlänge für das Austauschen von Telegrammen eingesetzt, mag sichergestellt sein, dass die Telegramme nicht aufgrund einer zu langen Telegrammlänge in dem Feldgerätesystem verworfen werden.

Viele Gerätehersteller geben jedoch nicht bekannt, welche maximale Telegrammlänge in ihren Komponenten verarbeitet werden können. Daher mag die Information über die maximal zu verwendende Telegrammlänge in einem Feldgerätesystem unbekannt sein. Folglich, mag es dem Zufall überlassen sein, die Telegrammlänge so einzustellen, dass die Komponenten mit der maximal möglichen Telegrammlänge arbeiten.

Wird mit einer geringeren Telegrammlänge als der maximal möglichen Telegrammlänge gearbeitet, so wird möglicherweise mit einer zu geringen Übertragungsgeschwindigkeit im System gearbeitet.

Die Druckschrift US 2008/0112388 A1 beschreibt eine Field Device Tool (FDT) basierte Anwendung mit einem Kommunikations Device Type Manager (DTM) und einem Router Device Type Manager (DTM).

Die Druckschrift US 2003/0076850 A1 beschreibt ein Verfahren zum Senden eines Datenpakets entlang eines Pfades wobei Fragment-Pakete generiert werden.

Es mag daher eine Aufgabe der vorliegenden Erfindung sein, eine bessere Übertragung in Feldgerätesystemen zu ermöglichen.

Demgemäß wird ein Verfahren zum Ermitteln einer Telegrammlänge, ein Programmelement zum Ermitteln einer Telegrammlänge, ein Verfahren zum Antworten auf das Empfangen eines Telegramms, ein Programmelement zum Antworten auf das Empfangen eines Telegramms, eine Bedienvorrichtung, ein Feldgerät und ein Feldgerätesystem zum Ermitteln einer Telegrammlänge angegeben.

Gemäß einem Aspekt der vorliegenden Erfindung wird ein Verfahren zum Ermitteln einer Telegrammlänge in einer Bedienvorrichtung zum Kommunizieren zwischen der Bedienvorrichtung und einem Feldgerät über ein Netzwerk angegeben, wobei das Verfahren das Zusammenstellen eines ersten Telegramms in der Bedienvorrichtung aufweist. Das erste Telegramm weist eine vorgebbare erste Telegrammlänge auf und das zusammengestellte erste Telegramm wird über das Netzwerk zu dem Peldgerät versendet.

Die Bedienvorrichtung wartet nach dem Versenden des ersten Telegramms auf das Empfangen eines zweiten Telegramms, welches zweite Telegramm die Bedienvorrichtung über das Netzwerk empfängt. Nach einem erfolgreichen Empfangen des zweiten Telegramms wird die erste Telegraminlänge um einen vorgebbaren Wert erhöht. Das Erhöhen des Wertes und das Versenden des entsprechenden Telegramms erfolgt solange, bis das Empfangen des zweiten Telegramms fehlschlägt. Nach einem fehlgeschlagenen Empfangen des zweiten Telegramms wird die erste Telegrammlänge bereitgestellt, welche zu einem erfolgreichen Empfangen des zweiten Telegramms geführt hat.

Das erste Telegramm und/oder das zweite Telegramm mag eine Vielzahl von Unter-Telegrammen aufweisen. Ein Unter-Telegramm mag ein Telegramm einer Vielzahl von Telegrammen sein, welche Vielzahl von Telegrammen innerhalb eines gemeinsamen Telegrammrahmens enthalten ist. Ein Telegrammrahmen mag also eine Vielzahl von Befehlen oder Antworten in der Form von Telegrammen aufweisen. Z.B. mag der HART® Standard ein Verfahren zulassen, bei dem in einem bestimmten Befehl eine Vielzahl solcher Unter-Telegramme enthalten sein können. Unter-Telegramme mögen beispielsweise beim Tunneln eines beliebigen Protokolls mittels des HART®-Protokolls durch ein HART®-Feldbussystem verwendet werden.

Außerdem mag das erste Telegramm und / oder das zweite Telegramm als Unter-Telegramme zumindest einen Befehl in Telegrammform oder zumindest eine Antwort in Telegrammform aufweisen und weitere Füll-Felder aufweisen, wie beispielsweise Füll-Bits.

Mittels Unter-Telegrammen mag sich die Granularität des ersten Telegramms und / oder die Granularität des zweiten Telegramms einstellen lassen. Es mag möglich sein, durch das Wählen der Unter-Telegramme die maximal mögliche Telegrammlänge genauer zu ermitteln.

Zum Feststellen, ob das zweite Telegramm erfolgreich empfangen wurde, mag ein Zeitglied oder ein Timer in der Bedienvorrichtung eingesetzt werden.

Gemäß einem anderen Aspekt der vorliegenden Erfindung wird ein Programmelement zum Ermitteln einer Telegrammlänge zum Kommunizieren zwischen einer Bedienvorrichtung und einem Feldgerät über ein Netzwerk angegeben. Das Programmelement steuert, wenn es von einem Prozessor ausgeführt wird, ein Verfahren, welches die folgenden Verfahrensschritte aufweist.

In der Bedienvorrichtung wird ein erstes Telegramm zusammengestellt, welches eine erste vorgebbare Telegrammlänge aufweist. Dieses zusammengestellte Telegramm wird über ein Netzwerk zu einem Feldgerät versendet. Nach dem Versenden wird auf ein zweites Telegramm gewartet, welches die Bedienvorrichtung über das Netzwerk empfängt, über welches die Bedienvorrichtung das erste Telegramm gesendet hat.

Darauf wird die erste Telegrammlänge des ersten Telegramms um einen vorgebbaren Wert erhöht und ein erstes Telegramm mit der erhöhten ersten Telegrammlänge übertragen. Das Übertragen eines ersten Telegramms mit erhöhter Telegrammlänge erfolgt solange, bis das Empfangen des zweiten Telegramms fehlschlägt. Bei einem Fehlschlagen des Übertragens des zweiten Telegramms wird die erste Telegrammlänge bereitgestellt, welche zu demjenigen ersten Telegramm gehört, welches erste Telegramm zu einem erfolgreichen Empfang des zweiten Telegramms geführt hat.

Allgemein mag die Bedienvorrichtung eine Quellvorrichtung sein und das Feldgerät eine Zielvorrichtung. Die Quellvorrichtung und die Zielvorrichtung mögen mittels eines Netzwerks verbunden sein und Teil eines Feldgerätesystems sein. Das Netwerk mag als Sternstruktur oder als Busstruktur oder als eine Kombination aus einer Sternstruktur und einer Busstruktur ausgebildet sein. Ein Beispiel für eine Busstruktur mag ein Feldbus, wie beispielsweise ein Profibus ®, ein HART® Bus, ein FOUNDATION^{™}-Fieldbus oder eine VBUS sein.

Die Bedienvorrichtung mag eine Bedienoberfläche, ein Bedientool, eine Rahmenanwendung oder ein Frame sein. Beispiele für Bedientools sind Emerson AMS, Siematic PDM oder Pactware™.

Gemäß einem weiteren Aspekt der vorliegenden Erfindung wird ein Verfahren zum Antworten eines Feldgeräts auf das Empfangen eines ersten Telegramms der Bedienoberfläche geschaffen. Das Verfahren weist das Empfangen des ersten Telegramms auf. Danach erfolgt ein Zusammenstellen eines zweiten Telegramms, wobei das erste Telegramm eine erste Telegrammlänge aufweist und das zweite Telegramm eine vorgebbare zweite Telegrammlänge aufweist, welche zweite Telegrammlänge von der ersten Telegrammlänge und/oder dem Typ des ersten Telegramms abhängt. Nach dem Zusammenstellen erfolgt das Versenden des zusammengestellten zweiten Telegramms über das Netzwerk zu der Bedienvorrichtung.

Der Typ eines Telegramms mag angeben, ob das Telegramm einen Befehl oder Kommando enthält, oder ob das Telegramm eine Antwort enthält.

Gemäß einem anderen Aspekt der vorliegenden Erfindung wird ein Programmelement zum Antworten eines Feldgeräts auf das Empfangen eines ersten Telegramms eines Bedientools über ein Netzwerk geschaffen, welches Programmelement, wenn es von einem Prozessor ausgeführt wird, ein Verfahren steuert, welches das Empfangen eines ersten Telegramms aufweist. Das erste Telegramm weist eine erste Telegrammlänge auf. Das Verfahren weist ferner das Zusammenstellen eines zweiten Telegramms mit einer zweiten Telegrammlänge auf, wobei die zweite Telegrammlänge vorgebbar ist. Die zweite Telegrammlänge hängt von der ersten Telegrammlänge ab.

Das Versenden des zusammengestellten zweiten Telegramms erfolgt über ein Netzwerk. Beispielsweise mag das Netzwerk, über das das zweite Telegramm versendet wird, identisch mit dem Netzwerk sein, über welches das erste Telegramm empfangen wurde.

Gemäß einem anderen Aspekt der vorliegenden Erfindung wird eine Bedienvorrichtung geschaffen. Die Bedienvorrichtung weist eine Quell-Zusammenstelleinrichtung, eine Quell-Versendeinrichtung und eine Quell-Empfangseinrichtung auf. Die Quell-Zusammenstelleinrichtung, die Quell-Versendeinrichtung und die Quell-Empfangseinrichtung sind miteinander verbunden.

Die Quell-Zusammenstelleinrichtung ist derart eingerichtet, dass die Quell-Zusammenstelleinrichtung ein erstes Telegramm mit einer vorgebbaren ersten Telegrammlänge zusammenstellen kann.

Die Quell-Versendeinrichtung ist eingerichtet, das zusammengestellte erste Telegramm über ein Netzwerk zu einem Feldgerät zu versenden.

Die Quell-Empfangseinrichtung ist eingerichtet auf das Empfangen eines zweiten Telegramms über das Netzwerk zu warten, wobei die Quell-Zusammenstelleinrichtung eingerichtet ist die erste Telegrammlänge solange um einen vorgebbaren Wert zu erhöhen, bis das Empfangen des zweiten Telegramms fehlschlägt. Die Quell-Empfangseinrichtung ist ferner eingerichtet, die erste Telegrammlänge bereitzustellen, welche zu einem erfolgreichen Empfangen des zweiten Telegramms geführt hat.

Gemäß noch einem anderen Ausführungsbeispiel der vorliegenden Erfindung wird ein Feldgerät geschaffen, welches eine Ziel-Empfangseinrichtung, eine Ziel-Zusammenstelleinrichtung und eine *Ziel-Versendeinrichtung aufweist. Die Ziel-Empfangseinrichtung ist eingerichtet ein erstes Telegramm mit einer ersten Telegramminlänge über ein Netzwerk von einer Bedienvorrichtung zu empfangen. Die Ziel-Zusammenstelleinrichtung ist derart eingerichtet, nach dem Empfangen des ersten Telegramms ein zweites Telegramm zusammenzustellen, wobei das zweite Telegramm eine vorgebbare zweite Telegrammlänge aufweist. Die zweite Telegrammlänge hängt von der ersten Telegrammlänge und/oder von dem Typ des ersten Telegramms ab. Die Ziel-Versendeeinrichtung ist derart eingerichtet, das zusammengestellte zweite Telegramm über das Netzwerk an die Bedienvorrichtung zu versenden.

Gemäß noch einem anderen Aspekt der vorliegenden Erfindung wird ein System, insbesondere ein Feldgerätesystem, zum Ermitteln einer Telegrammlänge zum Kommunizieren zwischen einer Bedienvorrichtung und einem Feldgerät über ein Netzwerk geschaffen, wobei das System eine erfindungsgemäße Bedienvorrichtung, ein erfindungsgemäßes Feldgerät und ein Netzwerk aufweist. Die Bedienvorrichtung ist mit dem Feldgerät über das Netzwerk gekoppelt.

Nachdem die maximal mögliche Telegrammlänge ermittelt worden ist, mag jede nachfolgende Kommunikation mit Telegrammen mit dieser oder mit einer geringeren Telegrammlänge erfolgen. Die Quell-Zusammenstelleinrichtung mag auf das Einhalten des ermittelten maximalen Wert der Telegrammlänge achten.

Eine DD (Device Description) mag eine gerätespezifische Beschreibung einer Gerätefunktionalität, Instrumentenfunktionalität oder Feldgerätefunktionalität sein. DD gibt es auch in der Form von EDD bzw. Enhanced EDD. Eine Gerätebeschreibung, welche als DD oder in dem DD-Format vorliegt, mag sich in einen DTM (Device Type Manager) zur Nutzung in einer FDT-Rahmenapplikation (FDT-Frame) umformen lassen.

Ein Tool, mit welchem eine DD in einen DTM umgeformt werden kann, mag ein Compiler oder DD-Compiler sein.

Ein Feldbussystem oder Feldgerätesystem mag Komponenten in der Form einer Bedienvorrichtung und einer Vielzahl von Feldgeräten aufweisen. Feldgeräte mögen beispielsweise ein Aktor, ein Sensor, ein Gateway, ein Auswertegerät oder eine Remote I/O (Remote Input/Output Vorrichtung) sein.

Eine Bedienvorrichtung mag auf ein Steuergerät, eine Control-Unit oder eine Remote I/O zugreifen. Die einzelnen Komponenten eines Feldgerätesystems mögen mittels eines Feldgerätebus miteinander verbunden sein. Die Komponenten mögen kommunizieren, indem sie Telegramme austauschen.

Die Telegramme mögen einerseits Befehle, insbesondere Steuerbefehle, enthalten. Andererseits mögen die Telegramme Ergebnisse von Messoperationen als Antwort enthalten.

Eine Remote I/O mag eine Kommunikationskomponente sein, welche vergleichbar mit einem Gateway zu einer Protokollumsetzung dient, d.h. eine Remote I/O mag ein erstes Protokoll in ein zweites Protokoll umsetzen. Beispielsweise mag eine Remote I/O ein Profibus® Protokoll in ein HART®-Bus Protokoll umsetzen können. Eine Vielzahl solcher Remote I/Os mag in dem Feldgerätesystem verteilt sein.

In einem Feldgerätesystem mögen Remote I/Os (RIOs) unterschiedlicher Hersteller eingesetzt werden. Eine Remote I/O mag auch als Gateway bezeichnet werden.

Eine Remote I/O mag eine besondere Form eines Gateways sein. Daher mag eine Remote I/O auch als Gateway bezeichnet werden. Insbesondere mag eine Remote I/O einen Übergang zu mehreren Feldgeräte-Segmenten bereitstellen, d.h. zu einer Vielzahl von Feldgeräte-Segmenten. Eine Remote I/O mag also eine Vielzahl von Feldgeräteschnittstellen aufweisen.

Ein Gateway, welches über genau zwei Schnittstellen verfügt mag beispielsweise eine Leitebene, welche ein Ethernet-Netzwerk aufweist, mit einer Feldebene koppeln, welche beispielsweise ein Profibus-Netzwerk aufweist.

Die Vielzahl von Feldgeräte-Segmente, d.h. die Vielzahl von Felgeräte, die über eine Remote-I/O angebunden sind mögen beispielsweise in einem Netz, welches auf dem HART® Standard basiert, über eine Punkt-zu-Punkt-Verbindung an die Remote I/O angebunden sein.

Beispielsweise mag eine HART® RIO genau einen Eingang, der auf dem Profibus-Standard basiert, aufweisen und eine Vielzahl von Ausgänge aufweisen, d.h. bis zu 255 Ausgänge, welche eingerichtet sind, jeweils ein 4-20mA Feldgerät anzuschließen. Beispielsweise kann das 4-20mA Feldgerät HART®-fähig sein.

Eine Profibus® RIO mag genau einen Eingang oder zumindest einen Eingang aufweisen, der auf dem Ethernet (IEEE 802.x) Standard basiert. Ferner mag die Profibus® RIO vier Segmente aufweisen, welche zum Anschließen von je einem Profibus®-Segment eingerichtet sind. Jedes Profibus-Segment mag wiederum beispielsweise bis zu 32 Profibus-Slave Geräte aufweisen.

Eine Foundation^{™} Fieldbus RIO mag genau einen Eingang der auf dem Ethernet Standard basiert, aufweisen, insbesondere der auf dem High Speed Ethernet (HSE) Standard basiert. Ferner mag die Foundation^{™} Fieldbus RIO vier Segmente aufweisen, an die je ein HI Segment (Hunk I Segment) angeschlossen werden kann. Jedes H1-Segment mag wiederum beispielsweise bis zu 10 Foundation^{™} Fieldbus (FF)-Slaves aufweisen.

Die Bedienvorrichtung, insbesondere das Bedientool, mag eine Instanz oder ein Modul eines PCs (Personal Computer) sein. Der PC mag mittels eines direkten Kabels mit einer Steuereinheit oder mit einer Control-Unit verbunden sein.

Statt über eine direkte Verbindung mag der PC auch über ein Gateway mit einer Steuereinheit verbunden sein. D.h., zwischen der Steuereinheit und dem PC mag ein Feldbussystem, beispielsweise ein Profibus® angeordnet sein.

Die Remote I/Os unterschiedlicher Hersteller mögen unterschiedliche maximale Telegrammlängen verarbeiten können. D.h. die unterschiedlichen Remote I/Os mögen sich darin unterscheiden welche maximale Länge sie für Telegramme zulassen, ohne ein Telegramm zu verwerfen. Diese maximal zulässige Telegrammlänge mag als maximal erlaubte Telegrammlänge bezeichnet werden.

Eine Remote I/O mag ein empfangenes Telegramm an ein Feldgerät weiterleiten, wenn die Länge des Telegramms die maximal zulässige Telegrammlänge der Remote I/O nicht übersteigt.

Eine Kommunikationskomponente zum Umsetzen eines Protokolls, wie eine Remote I/O, mag Anschlüsse aufweisen, an welche Feldgeräte angeschlossen werden können, die zu dem HART® Standard kompatibel sind. Die Zusammenfassung von zumindest einem solchen Anschluss mag als HART® Seite der Kommunikationskomponente bezeichnet werden.

Grundsätzlich mag mit dem Wissen um die eingesetzten Protokolle bereits die Information zur maximal zulässigen Telegrammlänge vorhanden sein, da die jeweilige Protokollspezifikation diesen Wert vorgeben mag. Beispielsweise kann ein HART®-Paket maximal 255 Bytes umfassen, ein Ethernetpaket dagegen kann bis zu 1.500 Bytes an Nutzdaten enthalten.

Je nach Hersteller der jeweiligen Kommunikationskomponente können die theoretisch realisierbaren maximalen Telegrammlängen aber nicht erreichbar sein. Beispielsweise mögen im Bereich der Remote-IO's die Feldsegmente im Zeitscheibenverfahren nacheinander bearbeitet werden. Die Feldsegmente können unterschiedliche Feldbussysteme sein. Bei den Remote-IO's kann es sich z.B. um Gateways handeln, welche von einem Profibus auf n HART®-Segmente umsetzen, d.h. welche einen Profibus auf eine Vielzahl von HART®-Segmente umsetzen.

Für den zyklischen Datenverkehr, d.h. für das regelmäßige Abfragen der Messwerte, mögen kurze Telegramme ausreichen, d.h. Telegramme mit einer geringen Telegrammlänge. Dieser zyklische Betrieb mag eine primäre Betriebsart des Feldgerätesystems darstellen.

Sollen die Feldgeräte jedoch konfiguriert bzw. parametriert werden, so mag die azyklische Kommunikation zum tragen kommen. Die Bedientools mögen für die azyklische Kommunikation möglichst mehrere Informationen in ein Datenpaket packen. D.h. eine Vielzahl von Informationen mögen in ein Datenpaket zusammengefasst werden, wodurch sich die Effizienz zum kommunizieren erhöhen mag.

Im Falle des HART®-Protokolls könnte ein Paket mit einer Paketgröße von bis zu 255 Bytes mit einer einzigen Anfrage übertragen werden. Allerdings kann in der Praxis die Situation vorliegen, dass die Hersteller der Remote-IO's ihre Komponenten oder Kommunikationskomponenten für die primäre Betriebsart optimiert oder ausgelegt haben. Da in der primären Betriebsart jedoch meist kurze Telegramme ausgetauscht werden, mögen die Komponenten somit für diese kurzen Telegrammlängen ausgelegt sein.

Damit mag die maximal mögliche Telegrammlänge, also die mit einer einzigen Anfrage oder mit einer einzigen Übertragung übertragbaren Informationen, ein kleinerer Wert sein, als theoretisch möglich sein mag. Die maximale Paketlänge, welche für die Übertragung von Nachrichten von den Herstellern vorgesehen ist, mag daher künstlich begrenzt sein. Die theoretisch maximal mögliche Telegrammlänge mag also nicht ausgenutzt werden. Die von einem Hersteller der Kommunikationskomponente bzw. der Feldgerätekomponente künstlich begrenzte maximale Paketlänge kann von Hersteller zu Hersteller unterschiedlich ausfallen.

Ein Anbieter einer Bediensoftware, welcher nicht weiß, welche Komponenten in einem Feldbussystem vorhanden sind und welcher insbesondere nicht weiß welche Paketlängen in den einzelnen Komponenten vorgesehen sind, kann im Wesentlichen alle möglichen Feldgeräteinstallationen berücksichtigen, indem er als die maximale Paketgröße die kleinste Paketgröße einstellt, die möglicherweise in einer Feldgeräteinstallation vorkommen kann. In anderen Worten bedeutet das, dass in einer Bediensoftware die maximale Paketgröße derart begrenzt werden mag, dass die azyklische Kommunikation auch bei der Kommunikationskomponente mit der geringsten maximalen Paketgröße noch funktioniert. Eine Vielzahl von FeldKomponenten mag einen Wert für die maximale Paketgröße von 27 Bytes aufweisen.

Um für den Anwender eine Möglichkeit zu schaffen, den Durchsatz für die azyklische Kommunikation zu erhöhen, kann in einigen Systemen die maximal zu verwendende Telegrammlänge manuell konfigurierbar sein. Die Ermittlung eines geeigneten Wertes mag für einen Endanwender aufwendig sein.

Gemäß einem Aspekt der vorliegende Erfindung mag während einem azyklischen Kommunizieren von Feldgeräten zumindest ein Nachrichten-Paket ausgetauscht werden. Die Paketlänge dieses Nachrichten-Pakets mag zunächst als kleinste bekannte Paketgröße für ein Feldbussystem gewählt werden, beispielsweise als 27 Bytes. Mit einem Paket dieser kleinsten bekannten Paketlänge mag eine Übertragung begonnen werden und mit jedem weiteren Paket mag die die Paketgröße oder Paketlänge sukzessive erhöht werden.

Der Startwert, also die kleinste bekannte Paketlänge, mag einstellbar sein. Somit mag auf einen technologischen Fortschritt reagiert werden können, d.h. es mag darauf reagiert werden können, wenn aufgrund einer neuen Technologie, nicht mehr kleinste Paketlängen verwendet werden, welche von älteren Systemen bekannt sind. Die maximal erlaubte Tetegrammlänge auf der HART® Seite mag bei den Kommunikationskomponenten unterschiedlicher Hersteller unterschiedlich sein. Zwischen einer Steuereinheit oder einer Remote I/O und einem Sensor bzw. einem Aktor mag das HART® Protokoll zum Einsatz kommen.

Zwischen der Bedienvorrichtung und der Steuereinheit und Remote I/O mag das Profibus® Protokoll zum Einsatz kommen. Sendet die Bedienvorrichtung einen Befehl an einen Aktor oder empfängt die Bedienvorrichtung eine Rückmeldung von einem Sensor, so mag dies mit der maximal auf der HART® Seite, also in Richtung Sensor und Aktor, festgelegten Telegrammlänge erfolgen.

Zwischen der Bedienvorrichtung und der Steuereinheit mag eine Kommunikation über einen Profibus® stattfinden. Die auf der HART® Seite festgelegte Telegrammlänge mag jedoch nicht über die Profibus® Kommunikation in überlagerte Schichten weitergereicht werden. Bedieneinheiten oder Bedienvorrichtungen mögen ein Beispiel für Vorrichtungen sein, welche eine überlagerte Schicht aufweisen. Eine solche Bedieneinheit könnte beispielsweise eine Information über die maximal zulässige Paketlänge oder die maximal zulässige Telegrammlänge erhalten, wenn eine untere Schicht eine Funktion verfügbar hätte, mit welcher die Telegrammlänge bereitgestellt werden könnte. Um einer überlagerten Schicht eine Information über die erlaubte oder maximal mögliche Telegrammlänge mitteilen zu können, könnte die untere Schicht oder die überlagerte Schicht diese Telegrammlänge ermitteln.

Allerdings mag bei einer Profibus-Spezifikation keine derartige Funktion standardmäßig verfügbar sein. Das erfindungsgemäße Verfahren, mag somit auch ein Feldbussystem, wie ein Profibussystem mit der Möglichkeit versehen, eine Information über die maximale Telegrammlänge bereitzustellen, insbesondere über die maximale Telegrammlänge, welche in einem angeschlossenen Feldbussystem wie einem HART®-Bussystem verfügbar ist. Die Bedieneinheit selbst, oder eine darunter liegende Schicht mag so in die Lage versetzt werden, die Telegrammlänge zu ermitteln.

Es könnte auch eine Funktion in einer RIO vorgesehen sein, welche dem übergeordneten System mitteilt oder die Information weiterleitet, welche Telegrammlängen diese Spezifische RIO zulässt.

Somit mag die Bedienvorrichtung, die für eine verschachtelte Kommunikation (nested communication) ausgelegt ist, mit der kleinsten zu erwartenden Telegrammlängengrenze operieren, die beispielsweise für HART® Kommunikationsgeräte bekannt ist. Das Kommunizieren mit Telegrammen mit der kleinsten zu erwartenden Telegrammlänge, mag sicherstellen, dass Telegramme vermieden werden, welche eine zu große Länge aufweisen und deshalb verworfen werden.

Sollten jedoch leistungsfähigere Komponenten in dem Feldgerätesystem zum Einsatz kommen, so mag die digitale Kommunikation nicht mit der theoretisch möglichen Telegrammlänge abgewickelt werden. Eine leistungsfähigere Komponente mag in diesem Zusammenhang eine Komponente sein, welche eine längere maximale Telegrammlänge zulässt als die kleinste bekannte Telegrammlänge. Für einen Anwender mag der Eindruck einer geringen Übertragungsgeschwindigkeit entstehen, wenn trotz leistungsfähigerer Komponenten mit einer geringen Telegrammlänge und somit mit einer geringeren Übertragungsgeschwindigkeit gearbeitet wird.

Der HART® Standard mag jedoch nicht zulassen, ein Telegramm in mehrere kleine Pakete weiter zu zerlegen, wie dies beispielsweise aus der IP (Internet Protokoll) Technologie bekannt ist. Es mag daher eine Idee der vorliegenden Erfindung sein, die maximal mögliche Telegrammlänge für die tatsächlich eingebauten Kommunikationskomponenten zu ermitteln und die Kommunikation entsprechend dynamisch anzupassen. In anderen Worten mag eine Idee der vorliegenden Erfindung sein, herauszufinden, mit welcher maximalen Telegrammlänge Telegramme noch über ein Feldbuskommunikationssystem übertragen werden können ohne verworfen zu werden. Somit mag sich ermitteln lassen, welche maximale Telegrammlänge von allen in dem Feldbuskommunikationssystem eingesetzten Kommunikationskomponenten unterstützt wird. Insbesondere mag zu bestimmen sein, welche maximale Telegrammlänge von allen Kommunikationskomponenten unterstützt werden, welche auf einem Pfad durch ein Feldbuskommunikationssystem liegen, welchen Pfad ein Telegramm auf dem Weg von der Bedienvorrichtung von oder zu dem entsprechenden Feldgerät zurücklegt.

In einem Bedientool, welches über verschachtelte oder Nested-Kommunikationsstrukturen mit einem Feldgerät kommuniziert, mag entweder ein fester Wert für die maximale Telegrammlänge verwendet werden oder es mag die Möglichkeit geboten werden, dass die maximal zulässige Telegrammlänge manuell konfiguriert wird.

Außerdem mag ein Netzknoten seinen Nachbarn mitteilen können, mit welcher Telegrammgröße der Netzknoten eine Antwort erwartet. Dazu mag ein Netzknoten oder Host beim Weiterreichen eines Telegramms oder Datagramms die maximal mögliche Länge eines Telegramms (MTU, Maximum Transmission Unit) in das weitergereichte Telegramm eintragen, welche Telegrammlänge der Netzknoten maximal verarbeiten kann. Der Netzknoten mag diese maximal mögliche Telegrammlänge angeben, sofern der Wert der maximalen Telegrammlänge kleiner ist als der Wert für die maximale Telegrammlänge in einem Telegramm, welches der Netzknoten selbst empfangen hat. Der Netzknoten kann beim Weiterreichen des Telegramms das Telegramm in entsprechend kleinere Einheiten unterteilen.

Bei einem Feldbusprotokoll, wie dem HART® Protokoll, mag es jedoch keine Funktionalität geben, mit der das Aufteilen von Paketen in kleinere Einheiten möglich ist. Die Größe eines Telegramms mag sich an der Größe eines Telegramms für einen Befehl oder für eine Antwort orientieren.

In einem Feldbuskommunikationssystem mag eine einmal festgelegte maximale Paketgröße für das gesamte Kommunikationsnetz gelten.

In Feldbustelegrammen, welche im Feldbussystem verteilt werden, mag neben den Nutzdaten, wie beispielsweise den Steuerdaten für die Feldgeräte oder den Messwerten von den Feldgeräten, nur ein geringer Overhead vorhanden sein. Der Telegrammrahmen welcher für das Übertragen eines Telegramms eingesetzt werden mag und welcher den Overhead eines Telegramms bestimmen mag, mag nur wenig Platz für eine zusätzliche Statusinformation vorsehen, welche Statusinformation beispielsweise für das Austauschen einer maximalen Telegrammlängengrenze zwischen einzelnen Knoten genutzt werden könnte.

Ferner mag eine große Anzahl installierter Geräte existieren, d.h. es mag eine große installierte Basis an Feldgeräten in einem Feldgerätesystem vorhanden sein, welche nicht ohne weiteres durch neue Geräte ersetzt werden können oder sollen. Es mag somit auch eine Idee der vorliegenden Erfindung sein, eine große installierte Basis weiter zu unterstützen.

Im Folgenden werden weitere Aspekte der vorliegenden Erfindung im Hinblick auf das Verfahren zum Ermitteln einer Telegrammlänge beschrieben. Diese Ausgestaltungen gelten auch für das Programmelement zum Ermitteln einer Telegrammlänge für das Verfahren zum Antworten eines Feldgeräts auf das Empfangen eines ersten Telegramms, für das Programmelement zum Antworten eines Feldgeräts auf das Empfangen eines ersten Telegramms, für die Bedienvorrichtung, für das Feldgerät und für das Feldgerätesystem zum Ermitteln einer Telegrammlänge zum Kommunizieren zwischen einer Bedienvorrichtung und einem Feldgerät.

Gemäß einem Aspekt der vorliegenden Erfindung wird ferner ein computerlesbares Medium geschaffen, in welchem ein Programm zum Ermitteln einer Telegrammlänge zum Kommunizieren zwischen einer Bedienvorrichtung und einem Feldgerät über ein Netzwerk gespeichert ist, welches Programm, wenn es von einem Prozessor ausgeführt wird, das Verfahren zum Ermitteln einer Telegrammlänge zum Kommunizieren zwischen einer Bedienvorrichtung und einem Feldgerät ausführt.

Gemäß einem anderen Aspekt der vorliegenden Erfindung wird ein computerlesbares Speichermedium geschaffen, in welchem ein Programm zum Antworten eines Feldgeräts auf das Empfangen eines ersten Telegramms eines Bedientools gespeichert ist, welches Programm, wenn es von einem Prozessor ausgeführt wird, das Verfahren zum Antworten eines Feldgeräts auf das Empfangen eines ersten Telegramms ausführt.

Ein computerlesbares Speichermedium mag eine CD-ROM (Compact Disc-Read Only Memory), eine DVD (Digital Versatile Disc), ein Flash-Speicher, ein USB-Stick (Universal Serial Bus), eine Hard Disc, eine Floppy Disc, ein RAM (Random Access Memory) oder ein EPROM (Erasable Programmable Read Only Memory) sein. Auch ein Netzwerk, wie beispielsweise das Internet, welches zum Downloaden eines Programms eingerichtet ist, mag als computerlesbares Speichermedium verstanden werden.

Gemäß einem weiteren Aspekt der vorliegenden Erfindung weist das zweite Telegramm eine vorgebbare zweite Telegrammlänge auf, welche von der ersten Telegrammlänge abhängt. Ferner weist das Verfahren das Bereitstellen der zweiten Telegrammlänge als erste Telegrammlänge auf.

Es mag mittels des Verfahrens möglich sein durch das erfolgreiche Empfangen eines Telegramms, insbesondere durch das erfolgreiche Empfangen eines zweiten Telegramms, welches die Antwort auf ein erstes Telegramm enthält, zu erkennen, ob eine Übermittlung einer Nachricht oder eines Telegramms erfolgreich war. Wenn das erste Telegramm, welches eine erste Telegrammlänge aufweist, erfolgreich zu einem Feldgerät gelangt ist, mag es möglich sein zu erkennen, dass ein Telegramm mit der ersten Telegrammlänge in dem vernetzten Feldgerätesystem übertragbar ist.

Nach einer Antwort, die in der Bedienvorrichtung oder in dem Bedientool empfangen wird, mag die Bedienvorrichtung ein größeres Paket übermitteln, d. h. ein Paket mit einer größeren Telegrammlänge. Das erfolgreiche Empfangen dieses größeren Pakets mag wiederum dem Bedientool ermöglichen festzustellen, dass auch diese größere Telegrammlänge übertragbar ist. D.h. das Bedientool mag feststellen, dass ein solches Telegramm über das Feldbussystem übertragbar ist, welches Telegramm diese größere Telegrammlänge aufweist.

Gemäß einem weiteren Aspekt der vorliegenden Erfindung mag zumindest eine der Telegrammlängen, ausgewählt aus der ersten Telegrammlänge und der zweiten Telegrammlänge, zumindest eine Telegrammlänge aufweisen, welche aus der Gruppe der Telegrammlängen ausgewählt ist, bestehend aus der Länge eines Bits, aus der Länge eines Bytes, aus der Länge eines Worts, aus der Länge eines Doppelworts, aus der Länge von acht Bytes, aus der Länge eines Floatwerts, aus der Länge eines Integer-Werts, aus der Länge eines Abfragebefehls, aus der Länge einer Antwort-Nachricht und aus der Länge eines Parametrierbefehls.

Mittels einer großen Anzahl möglicher Telegrammlängen mag sich die Granularität des erfindungsgemäßen Verfahrens einstellen lassen. D. h. je größer nach einer erfolgreichen Übertragung eines Telegramms das nachfolgende Telegramm ist, mag es möglich sein schneller zu dem zu ermittelnden großen Paket zu gelangten. Die Länge des Telegramms mag sich dabei an den vorhandenen Befehlen bzw. den vorhandenen Antworten oder Antwort-Nachrichten orientieren, welche über das Feldgerätesystem übertragen werden. Die Befehle bzw. Antworten mögen die Unter-Telegramme sein, welche das erste Telegramm bzw. das zweite Telegramm aufweist. Es mag auch möglich sein, zunächst mit großen Werten zu beginnen und beim annähern an den gesuchten Wert die Größe der Telegramme langsam zu verändern.

Die Telegrammlänge mag sich durch ein Zusammensetzen aus verschiedenen Befehlen ergeben. Ein HART® Befehl beispielsweise mag die Länge eines Bytes oder eines Wortes haben.

Durch das gleichzeitige Senden einer Vielzahl von Befehlen, d.h. von zumindest zwei Befehlen, mag sich die Telegrammlänge verändern lassen. Der Bedienvorrichtung mag dabei die Länge des ausgesendeten Telegramms bekannt sein.

Z.B. mag der HART® Standard ein Verfahren zulassen, bei dem ein bestimmter HART®-Befehl eine Vielzahl solcher Unter-Telegramme aufweisen kann, wie beispielsweise beim Tunneln eines beliebigen Protokolls mittels des HART®-Protokolls.

Gemäß noch einem anderen Aspekt der vorliegenden Erfindung weist zumindest eine Vorrichtung ausgewählt aus der Bedienvorrichtung und dem Feldgerät zumindest eine Vorrichtung auf, welche aus der Gruppe der Vorrichtungen bestehend aus einem Device Type Manager (DTM), d.h. aus einer Komponente für FDT Frames, einer Device Description (DD) und einer Remote I/O Vorrichtung ausgewählt ist.

Ein Device Type Manager und eine Device Description mögen eine Darstellung des Verfahrens in einer entsprechenden vorgegebenen Beschreibungssprache sein und als Modul in einer Bedienvorrichtung installiert sein. Das Verfahren zum Ermitteln der Telegrammlänge und das Verfahren zum Antworten auf ein Telegramm mögen in einem entsprechenden Modul der Bedienvorrichtung und/oder des Feldgeräts ausgeführt werden und in der entsprechenden Beschreibungssprache dargestellt sein.

Für eine DD mögen die Telegramme und damit auch die Telegrammlängen fest vorgegeben sein. Gemäß einem Ausführungsbeispiel der vorliegenden Erfindung wird eine dynamische Anpassung der Telegrammlänge bereitgestellt, indem unterschiedliche DD's mit unterschiedlich langen Telegrammen bereitgestellt werden.

Es mag eine DD existieren, die Telegramme mit einer vorgegebenen Telegrammlänge aufweist. Daher mag ein Telegrammaustausch von diesen Telegrammen mit einer fest vorgegebenen Telegrammlänge in einem Feldbussystem möglich sein. Um die Telegrammlänge erhöhen zu können, d.h. um eine dynamische Anpassung der Telegrammlänge zu ermöglichen, mag eine andere DD existieren. Diese andere DD mag Telegramme mit einer längeren Telegrammlänge generieren können, die von RIOs verarbeitet werden können, welche RIOs eine längere Telegrammlänge unterstützen. Mittels dieser anderen DD mag eine höhere Datenübertragungsrate erreicht werden.

Die andere DD mag in den Frame geladen werden, wenn die DD mit der fest vorgegebenen Telegrammlänge zu einer erfolgreichen Übertragung geführt hat. Sollte auch die andere DD zu einer erfolgreichen Übertragung führen, kann ebenfalls dynamisch eine weitere DD geladen werden, welche noch längere Telegramme generieren mag. So mag durch das Austauschen der DDs ein Erhöhen der Telegrammlänge durchführbar sein.

Gemäß einem anderen Aspekt der vorliegenden Erfindung wird der Wert der zweiten Telegrammlänge gegenüber dem Wert der ersten Telegrammlänge um einen vorgebbaren Wert erhöht.

Das erste Telegramm mag einen bestimmten Telegrammtyp, wie beispielsweise einen Befehl, ein Kommando, einen Parametrierbefehl oder eine Antwort aufweisen.

Ein Wert der Telegrammlänge welcher erhöht worden ist, kann wieder erniedrigt werden, wenn der erhöhte Wert über dem maximal zulässigen Wert liegt, so dass die zweite Telegrammlänge oder die erhöhte erste Telegrammlänge gegenüber der ursprünglich ersten Telegrammlänge niedrig ist. In anderen Worten, mag der Wert um einen geringeren Wert erhöht werden, als um den Wert, der zu einem Fehlschlagen der Übertragung geführt hat.

Gemäß einem weiteren Aspekt der vorliegenden Erfindung wird das Verfahren zum Ermitteln einer Telegrammlänge vor und/oder während einer Nutzdatenübertragung ausgeführt.

Beim Ausführen des Verfahrens vor einer Nutzdatenübertragung, d. h. beim Initialisieren eines Netzwerkes oder eines Kommunikationselements, wie beispielsweise einer Bedienvorrichtung oder eines Feldgeräts, mag es möglich sein eine beliebig feine Granularität zum Ermitteln einer maximal möglichen Telegrammlänge einzusetzen. D.h. ein Telegramm mag sich beispielsweise aus einem Parametrierbefehl und zumindest einem zusätzlichen Bit zusammensetzen. Beim Ausführen des Verfahrens während einer Nutzdatenübertragung mag die Granularität durch die Befehle bzw. Kommandos oder Antworten vorgegeben sein, welche über das System übertragen werden sollen. Allerdings mag für das Ermitteln während der Nutzdatenübertragung keine Zeit für das Initialisieren eines Feldgerätesystems anfallen.

Im Folgenden werden weitere Aspekte der vorliegenden Erfindung im Hinblick auf das Feldgerät beschrieben. Diese Ausgestaltungen gelten auch für das Verfahren zum Ermitteln einer Telegrammlänge, für das Programmelement zum Ermitteln einer Telegrammlänge, für das Verfahren zum Antworten eines Feldgeräts, für das Programmelement zum Antworten eines Feldgeräts, für das Bedientool und für das System zum Ermitteln einer Telegrammlänge zum Kommunizieren zwischen einer Bedienvorrichtung und einem Feldgerät.

Gemäß einem weiteren Aspekt der vorliegenden Erfindung ist das Feldgerät, insbesondere die Ziel-Versendeinrichtung, derart eingerichtet, ein zweites Telegramm zusammenzustellen, so dass die zweite Telegrammlänge gegenüber der ersten Telegrammlänge um einen vorgebbaren Wert länger ist.

Gemäß einem weiteren Aspekt der vorliegenden Erfindung ist das Feldgerät zumindest eine Vorrichtung ausgewählt aus der Gruppe der Vorrichtungen bestehend aus einem Sensor, einem Aktor, einem Gateway, einer Steuereinheit, einer Remote I/O, einem Auswertegerät, einem Füllstandssensor, einem Radarsensor, einem Mikrowellensensor, einem Drucksensor, einem Temperatursensor, einem Durchflusssensor und einem Grenzwertsensor.

Es sei angemerkt, dass der Begriff maximale Telegrammlänge im Sinne eines Namens zu verstehen sein mag. Der Begriffmaximale Telegrammlänge mag nicht ausschließen, dass es durch weitere Verfeinerungs- und Optimierungsverfahren möglich sein mag, einen noch größeren maximalen Wert zu ermitteln, als den mittels des erfindungsgemäßen Verfahrens zu ermittelten Wert. Maximal mag sich darauf beziehen, dass es sich um den größten mit diesem Verfahren zu ermittelnden Wert handelt.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrenansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehören, auch jede Kombination zwischen Merkmalen gehört, die sich auf unterschiedliche Kategorien von Gegenständen beziehen. Insbesondere sollen Kombinationen zwischen Merkmalen von Vorrichtungsansprüchen und Merkmalen von Verfahrensansprüchen offenbart sein.

Im Folgenden werden vorteilhafte Ausführungsbeispiele der vorliegenden Erfindung mit Verweis auf die Figuren beschrieben.
Fig. 1 zeigt eine Bedienvorrichtung gemäß einem exemplarischen Ausführungsbeispiel der vorliegenden Erfindung.
Fig. 2 zeigt eine weitere Bedienvorrichtung gemäß einem exemplarischen Ausführungsbeispiel der vorliegenden Erfindung.
Fig. 3 zeigt ein Feldgerätesystem gemäß einem exemplarischen Ausführungsbeispiel der vorliegenden Erfindung.
Fig. 4 zeigt ein weiteres Feldgerätesystem gemäß einem exemplarischen Ausführungsbeispiel der vorliegenden Erfindung.
Fig. 5 zeigt noch ein weiteres Feldgerätesystem gemäß einem exemplarischen Ausführungsbeispiel der vorliegenden Erfindung.
Fig. 6 zeigt ein Flussdiagramm eines Verfahrens zum Ermitteln einer Telegrammlänge gemäß einem exemplarischen Ausführungsbeispiel der vorliegenden Erfindung.
Fig. 7 zeigt ein Feldgerät gemäß einem exemplarischen Ausführungsbeispiel der vorliegenden Erfindung.

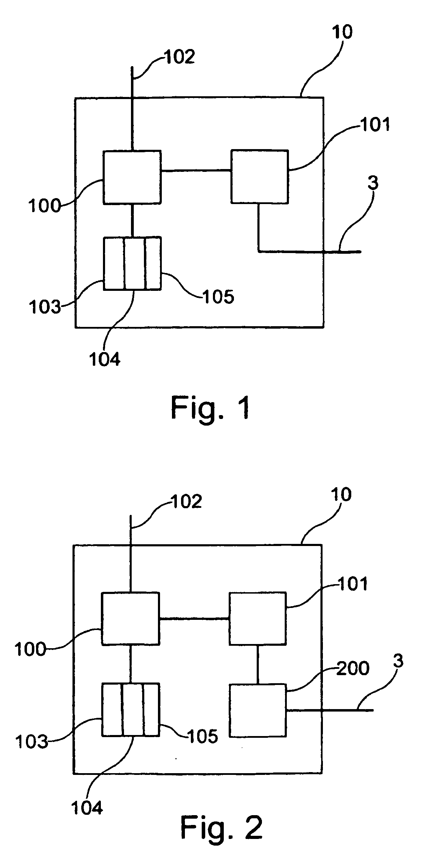

Die Darstellungen in den Figuren sind schematisch und nicht maßstäblich. In der folgenden Beschreibung der Fig. 1 bis Fig. 7 werden die gleichen Bezugsziffern für gleiche oder sich entsprechende Elemente verwendet.

In der Fig. 1 ist eine Bedienvorrichtung 10 oder ein Bedientool 10 dargestellt, welches ein DTM-Modul für ein Feldgerät 100 bzw. einen Feldgeräte DTM 100 aufweist. Ein Feldgeräte DTM 100 ist insbesondere ein Sensor DTM 100 oder ein Aktor DTM 100. Ferner weist das Bedientoll 10 einen DTM für eine Remote I/O 101 auf.

Der Feldgeräte DTM 100 stellt für ein Field Device Tool (FDT) eine Schnittstelle dar, welches FIT in Fig. 1 nicht dargestellt ist aber möglicherweise an der Schnittstelle 102 angeschlossen ist. Der Feldgeräte DTM 100 verwaltet feldgerätespezifische Befehle und kann feldgerätespezifische Antworten auswerten. Der Feldgeräte DTM 100 stellt sozusagen den Treiber für ein entferntes Feldgerät dar, insbesondere für einen entfernten Sensor oder Aktor. Dieses Feldgerät DTM 100 läuft in dem Bedientool 10.

Bei dem Bedientool 10 mag es sich um einen PC 10 handeln, welcher einen Rahmen oder eine Rahmenanwendung zur Verfügung stellt, in welcher sich der Feldgeräte DTM 100 integriert. Der Feldgeräte DTM 100 ist ferner mit dem DTM 101 der Remote I/O verbunden. Der DTM 101 der Remote I/O setzt auf einer Schnittstelle 3, beispielsweise einer RS232 Schnittstelle 3 auf.

Mittels der RS232 Schnittstelle 3 kann das Bedientool 10 an einer Steuereinheit (in Fig. 1 nicht dargestellt) angeschlossen werden.

Das Bedientool 10 weist ferner die Quell-Zusammenstelleinrichtung 103 auf, welche mit dem Feldgeräte DTM 100 verbunden ist. In Fig. 1 ist ferner die Quell-Versendeeinrichtung 104 und die Quell-Empfangseinrichtung 105 dargestellt. Die Quell-Zusammenstelleinrichtung 103 stellt ein Telegramm für das entsprechende Feldgerät zusammen, also für den entsprechenden Sensor oder tür den entsprechenden Aktor. Das zusammengestellte Telegramm wird dann von dem Feldgeräte DTM 100 über den Remote I/O DTM 101 in das Netz übertragen. Dabei wird das zusammengestellte Telegramm von dem Feldgeräte DTM 100 in ein Format umgeformt, welches für das zugehörige Feldgerät passend ist, und der DTM 101 der Remote I/O formt das zusammengestellte Telegramm in ein Format um, welches die zugehörige Remote I/O verstehen kann.

Die Quell-Zusammenstelleinrichtung 103 stellt das Telegramm so zusammen, dass mittels des Telegramms die maximal zulässige Telegrammlänge ermittelt werden kann.

Die Fig. 2 zeigt ebenfalls wie die Fig. 1 ein Bedientool 10 samt Quell-Zusammenstelleinrichtung 103, Quell-Versendeeinrichtung 104 und Quell-Empfangseinrichtung 105. Zusätzlich zu Fig. 1 weist das Bedientool 10 der Fig. 2 einen Profibus® DTM 200 auf, welcher mit dem Remote I/O DTM 101 verbunden ist. Außerdem stellt der Profibus® DTM 200 an dem Anschluss 3 oder an dem Interface 3 ein Telegramm zur Verfügung, welches an einen Profibus® angepasst ist. D. h. das Telegramm genügt der Profibus® Spezifikation.

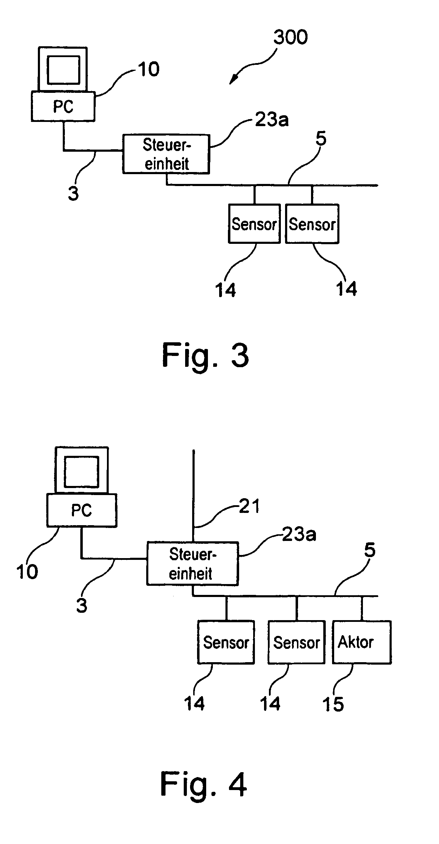

Die Fig. 3 zeigt ein Feldgerätesystem 300, bei dem das Bedientool 10 über die RS232 Schnittstelle 3 mit einer Steuereinheit 23a oder Remote I/O 23a direkt verbunden ist. Bei der Remote I/O 23a handelt es sich um eine Remote I/O 23a, welche auf dem HART® Standard basiert. An der Remote I/O 23a lassen sich somit über den HART® Bus 5 die HART® Sensoren 14 anschließen. Bei den HART® Sensoren 14 handelt es sich beispielsweise um Füllstandssensoren oder Füllstandsmessgeräte 14.

Die HART®-seitigen Sensoren 14 kommunizieren mit der Bedienvorrichtung 10 und insbesondere mit dem für den jeweiligen Sensor 14 vorgesehenen Feldgeräte DTM 100 innerhalb der Bedienvorrichtung 10.

Für Datentelegramme oder Datagramme kann die Steuereinheit 23a oder Remote 110 23a einen Engpass darstellen, da die Remote I/O 23a eine obere Grenze für die Länge eines Telegramms aufweisen kann, welches Telegramm von und/oder zu einem Feldgerät 14 gesendet wird. Da die Telegramme in dem Feldgeräte DTM 100 dem jeweiligen Feldgerätetyp entsprechend zusammengestellt werden, werden in dem Bedientool 10 mittels der Quell-Zusammenstelleinrichtung 103 die HART® Telegramme bereits fertig konfiguriert, welche Telegramme zu den HART® Sensoren 14 übertragen werden soll.

Das HART® Protokoll sicht es nicht vor, auf der Übertragungsstrecke, beispielsweise in der Remote I/O 23a, die HART® Telegramme weiter zu zerlegen. Die maximale Größe der zu übertragenden Telegramme bestimmt sich dabei durch die maximale Telegrammlänge, welche die Steuereinheit 23a in der Lage ist zu übertragen.

Wenn die maximale Telegrammlänge, welche die Steuereinheit 23a zum Übertragen zulässt nicht bekannt ist, lässt sich diese Größe durch das erfindungsgemäße Verfahren bestimmen. Dabei sendet das Bedientool 10, insbesondere die Zusammenstellvorrichtung 103, ein HART® Telegramm mit einer bekannten Länge zu einem der Sensoren 14. Ein HART® Telegramm bekannter Länge ist beispielsweise ein Abfragebefehl für einen der Sensoren 14. Der zugehörige Sensor 14 quittiert den Empfang eines für ihn bestimmten Telegramms mit einer Antwortnachricht.

Wird diese Antwortnachricht in der Quell-Empfangseinrichtung 105 erkannt, so lässt sich daraus schließen, dass die Steuereinheit 23a ein Telegramm der bekannten Größe bzw. der bekannten Telegrammlänge übertragen kann. Danach kann die Quell-Zusammenstelleinrichtung 103 ein Telegramm mit einer größeren Länge zusammenstellen und ermitteln, ob sich auch dieses größere Telegramm übertragen lässt.

Beispielsweise kann ein größeres Telegramm gebildet werden, indem zwei Befehle, welche an den Sensor 14 gerichtet sind, gleichzeitig in einem Telegramm übertragen werden. Wird auch dieses zweite Telegramm, erfolgreich übertragen, kann dieser nunmehr ermittelte maximale Wert gespeichert werden und bei der Übertragung zukünftiger Pakete oder Telegramme berücksichtigt werden. Das Telegramm der größeren Länge kann die zwei Befehle als Unter-Telegramme aufweisen.

Die Ermitlung der maximal möglichen Telegrammlänge in dem Feldgerätesystem 300 kann bei künftigen Übertragungen berücksichtigt werden.

Die Fig. 4 entspricht im Wesentlichen der Fig. 3. In der Fig. 4 ist das Bedientool 10 direkt mit der Steuereinheit 23a verbunden, wobei an der Steuereinheit 23a das Profibus® Interface 21 angeschlossen ist. Ferner ist an dem HART®-Bus 5 zusätzlich zu den HART®-Sensoren 14 der HART® -Aktor 15 angeschlossen.

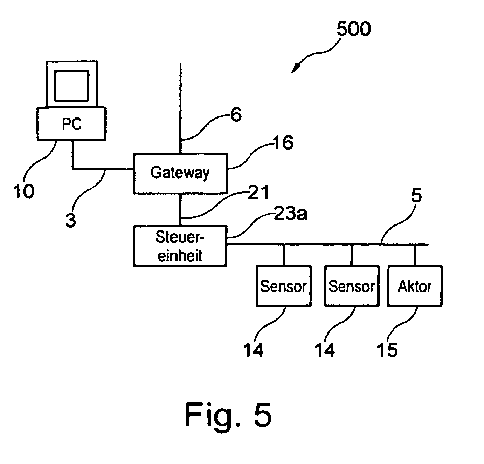

Die Fig. 5 zeigt ein weiteres Feldgerätesystem 500 gemäß einem exemplarischen Ausführungsbeispiel der vorliegenden Erfindung. Das Bedientool 10 ist über die RS232 Schnittstelle 3 mit einem Gateway 16 verbunden. Das Gateway 16 setzt Befehle, welche das Gateway 16 über die RS232 Schnittstelle 3 von der Bedienvorrichtung 10 erhält, auf den Profibus® 21 um. Ferner ist in der Fig. 5 der Ethernetanschluss 6 zu erkennen, welcher mit dem Gateway 16 verbunden ist.

In der Bedienvorrichtung 10 ist in der Anordnung 500 nach Fig. 5 zur Berücksichtigung des Profibus® 21 ein Profibus® DTM 200 enthalten. Der Profibus® DTM 200 ist in Fig. 5 nicht gezeigt.

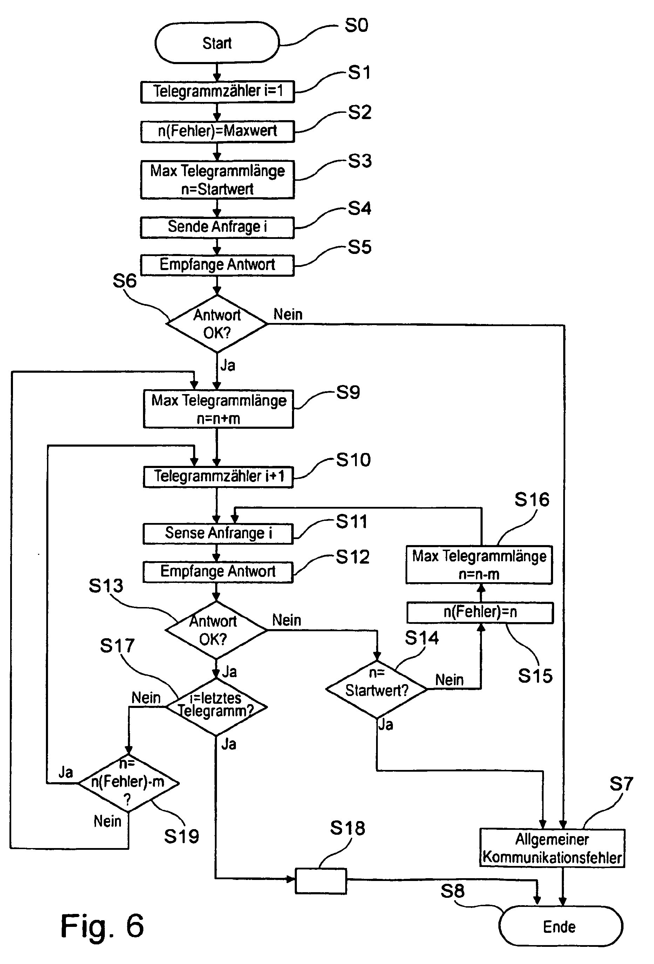

Ein Flussdiagramm für ein Verfahren zum Ermitteln einer Telegrammlänge gemäß einem exemplarischen Ausführungsbeispiel der vorliegende Erfindung ist in Fig. 6 gezeigt. Im Schritt S0 wird das Verfahren initialisiert.

In dem Schritt S 1 wird ein Telegrammzähler, der beispielsweise durch die Variable i ausgedrückt wird, auf einen Initialwert festgelegt. Der Initialwert für einen Telegrammzähler kann beispielsweise 1 sein.

In einem darauf folgenden Schritt S2 wird eine Variable, welche die Telegrammlänge bei einer fehlerhaften Übertragung darstellt, auf einen Maximalwert festgelegt. Die Variable, welche einen Wert für eine Tetegrammlänge enthält, welche Länge zu einer fehlerhaften Übertragung geführt hat, mag beispielsweise "n(Fehler)" heißen und mit einem vorgebbaren Maximalwert festgelegt werden. Beispielsweise mag der Maximalwert 1024 Byte betragen.

Ferner wird die weitere Variable n mit einem Startwert initialisiert. Die Variable n mag die maximal mögliche Telegrammlänge enthalten. Der Startwert mag die Länge des kleinsten vorhandenen zu übertragenden Telegramms aufweisen, beispielsweise 20 Byte. Die Variable n wird in dem Schritt S3 festgelegt.

Im Schritt S4 erfolgt das Senden einer Anfrage von der Quellvorrichtung an die Zielvorrichtung, also von dem Bedientool 10 an einen Sensor 14 oder einen Aktor 15. Für jede Anfrage wird eine Nummer in einer Variablen i festgehalten.

Nach dem Aussenden der Anfrage, insbesondere nach dem Aussenden des zusammengestellten Telegramms, wird im Schritt S5 auf eine Antwort gewartet.

Im Schritt S6 wird entschieden, ob im Schritt S5 keine Antwort empfangen wurde oder ob eine verfälschte Antwort empfangen wurde. Wenn keine Antwort oder eine verfälschte Antwort empfangen wurde, so wird in den Schritt S7 gesprungen, in welchem ein allgemeiner Kommunikationsfehler festgestellt wird und gemeldet wird.

Danach wird das Programm abgebrochen und der Zustand S8, ein sog. Idlezustand erreicht.

Wurde im Schritt S5 eine Antwort empfangen und war die Antwort in Ordnung, so wird in den Schritt S9 gesprungen.

Die maximal mögliche Telegrammlänge wird in dem Schritt S9 um den vorgebbaren Wert in erhöht. Der vorgebbare Wert m kann die Länge eines weiteren Befehls sein.

Der Wert m kann die Länge eines Unter-Tetegramms sein. Durch die Wahl der Größe der Telegrammlänge, welche nach einem erfolgreichen Empfang hinzugefügt wird, kann die Granularität des Verfahrens festgelegt werden. D. h. mit der Wahl eines Wertes für die Variable in kann die Geschwindigkeit beeinflusst werden, mit welcher die maximale zu übertragende Telegrammlänge bestimmt wird.

Die Anzahl der gesendeten Anfrage, insbesondere der Telegrammzähler, wird in dem Schritt S10 um 1 erhöht. Dann wird im Schritt S11 eine erneute Anfrage gesendet, d. h. es wird das weitere Telegramm mit der veränderten Länge gesendet. Ein weiters Telegramm mag durch einen Telegrammzähler i+1 gekennzeichnet sein, d.h. einen um 1 erhöhten Telegrammzähler i.

Nach dem Aussenden des weiteren Telegramms sieht das Verfahren vor, auf den Empfang einer Antwort von dem angesprochenen Sensor oder Aktor zu warten. Wenn eine Antwort empfangen wird, erfolgt ein Überprüfen, ob die empfangene Antwort korrekt war. Das Überprüfen erfolgt im Schritt S13.

Wenn keine korrekte Antwort empfangen wurde oder wenn keine Antwort empfangen wurde, so wird in den Schritt S 14 gesprungen. Ob keine Antwort empfangen wurde, kann beispielsweise mittels einer Timervorrichtung festgestellt werden, welche eine vorgebbare Zeit wartet, bevor die Timereinrichtung feststellt, dass kein Antworttelegramm empfangen wurde. Im Schritt S 14 wird festgestellt, ob die ermittelte Telegrammlänge n dem im Schritt S3 festgelegten Startwert entspricht.

Wenn die Telegrammiänge n im Schritt S14 dem Startwert entspricht wird ein allgemeiner Kommunikationsfehter festgestellt und in den Schritt S7 gesprungen. Durch diesen Sprung lassen sich echte Kommunikationsstörungen schnell erkennen und es wird vermieden, dass das System zunächst versucht, die Telegrammlänge auf Werte kleiner dem Initialwert zu verkürzen.

Weicht in dem Schritt S14 der ermittelte Wert n für die aktuell ausgesendete Telegrammlänge von dem Startwert ab, so wird in den Schritt S15 gesprungen. Im Schritt S15 wird die Telegrammlänge, bei der ein Fehler festgestellt wurde, als die aktuelle Telegrammlänge festgelegt. D. h. die Variable n (Fehler) nimmt den Werft der aktuellen Telegrammlänge n an.

Der Wert der maximal möglichen Telegrammlänge n wird dann im Schritt S16 festgelegt, indem die aktuelle Telegrammlänge n oder die Telegrammlänge, bei der ein Fehler aufgetreten ist, um den vorgebbaren Wert m reduziert wird. In anderen Worten, der Wert der aktuellen Telegrammlänge n wird wieder um den Wert m reduziert, um weichen Wert m der Wert n im Schritt S9 erhöht wurden ist.

Mit dieser im Schritt S16 ermittelten maximalen Telegrammlänge wird in Schritt S11 erneut eine Anfrage gestartet wird.

Im Schritt S17 wird festgestellt, ob das letzte Telegramm übertragen wurde. Dies kann zum Beispiel dann der Fall sein, wenn der DTM eine Warteschlange mit Kommunikationsbefehlen oder einen Befehls-Stack abgearbeitet hat oder wenn der DTM vom Zustand Online in den Zustand Offline geschaltet wird. Die Anzahl der Befehle welche sich in der Warteschlange befinden wird beispielsweise in einem Register gespeichert. D.h. der Schritt S 17 kann dem Abfragen eines Registers entsprechen.

Wurde das letzte Telegramm einer vorgebbaren Anzahl an Telegrammen übertragen, so wird im Schritt S18 die ermittelte maximale Telegrammlänge bereitgestellt und in den End-Zustand S8 gesprungen. Durch das Bereitstellen der maximalen Tetegrammlänge kann bei einer künftigen oder nachfolgenden Übertragung die maximale Telegrummlänge verwendet werden, ohne die maximale Telegrammlänge ermitteln zu müssen. Die maximale Telegrammlänge kann beispielsweise in der Bedienvorrichtung 10 gespeichert sein. Somit kann die maximale Telegrammlänge an übergeordnete Schichten weitergegeben werden.

Handelt es sich im Schritt S17 nicht um das letzte Telegramm, so wird im Schritt S19 festgestellt, ob die Telegrammlänge weiter zu erhöhen ist. D. h. es wird festgestellt, ob die aktuelle Telegrammtange n mit der maximal möglichen Telegrammlänge übereinstimmt, welche in Schritt S16 ermittelt wurde.

Wenn die maximale mögliche Telegrammlänge noch nicht erreicht wurde, so wird vom Schritt S 19 in den Schritt S9 gesprungen und die Telegrammlänge wird um einen weiteren vorgebbaren Wert m erhöht. Somit stellt das Verfahren im Schritt S19 fest, ob sich das Verfahren schon an die Grenze der maximal möglichen Tetegrammlänge herangetastet hat.

Gemäß einer weiteren Ausführungsform der vorliegenden Erfindung mag der Wert m, um den sich die maximal mögliche Telegrammlänge im Schritt S9 erhöht, variabel sein, d. h., wenn festgestellt wird, dass eine Erhöhung um beispielsweise 4 Byte nicht mehr möglich ist, kann immer noch eine Erhöhung um 2 Byte möglich sein und ausgetestet werden.

Das Verfahren in Fig. 6 beschreibt somit ein Verfahren zum Ermitteln der maximal möglichen Telegrammlänge in einem Feldbussystemsystem.

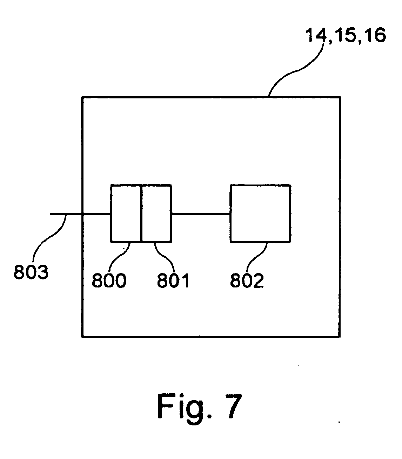

In der Fig. 7 ist ein Reldgerät 14, 15, 16 gemäß einem exemplarischen Ausführungsbeispiel der vorliegenden Erfindung dargestellt. Insbesondere ist dargestellt, dass das Feldgerät 14, 15, 16 eine Ziel-Empfangseinrichtung 800, eine Ziel-Zusammenstelleinrichtung 802 und eine Ziel-Versendeinrichtung 801 aufweist. Die Ziel-Empfangseinrichtung 800 und die Ziel- Versendeinrichtung 801 sind miteinander physikalisch verbunden. Die Zieh- Zusamnenstelleinrichtung 802 und die Ziel-Versendeinrichtung 801 sind miteinander physikalisch verbunden.

Über die Schnittstelle 803 werden Telegramme empfangen und versendet.

Ergänzend ist darauf hinzuweisen, dass "umfassend" und, aufweisend" keine anderen Elemente oder Schritte ausschließt und "eine" oder ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Ermitteln einer Telegrammlänge in einer Bedienvorrichtung (10) zum Kommunizieren von Telegrammen zwischen der Bedienvorrichtung (10) und einem Feldgerät (14, 15, 16) in einem Feldgerätesystem (300, 500), das Verfahren aufweisend:
Zusammenstellen eines ersten Telegramms in der Bedienvorrichtung (10) mit einer vorgebbaren ersten Telegrammlänge;
Versenden des zusammengestellten ersten Telegramms über ein Netzwerk zu dem Feldgerät (14, 15, 16);
Warten auf das Empfangen eines zweiten Telegramms über das Netwerk in der Bedienvorrichtung (10);
Erhöhen der ersten Telegrammlänge um einen vorgebbaren Wert solange bis das Empfangen des zweiten Telegramms fehlschlägt;
Bereitstellen der ersten Telegrammlänge, welche zu einem erfolgreichen Empfangen des zweiten Telegramms geführt hat.

2. Verfahren nach Anspruch 1, ferner aufweisend:
Bereitstellen der zweiten Telegrammlänge als erste Telegrammlänge;
wobei das zweite Telegramm eine vorgebbare zweite Telegrammlänge aufweist, welche von der ersten Telegrammlänge abhängt.

3. Verfahren nach Anspruch 1 oder 2, wobei zumindest eine Telegrammlänge, ausgewählt aus der ersten Telegrammlänge und der zweiten Telegrammlänge, zumindest eine Telegrammlänge ist, welche aus der Gruppe der Telegrammlängen bestehend aus der Länge eines Bits, aus der Länge eines Bytes, aus der Länge eines Worts, aus der Länge eines Doppel-Worts, aus der Länge von 8 Bytes, aus der Länge eines Float-Werts, aus der Länge eines Integer-Wertes, aus der Länge eines Abfragebefehls und aus der Länge eines Parametrierbefehls ausgewählt ist.

4. Verfahren nach einem der Ansprüche 1 bis 3, wobei zumindest eine Vorrichtung, ausgewählt aus der Bedienvorrichtung (10) und dem Feldgerät (14, 15, 16), zumindest eine Vorrichtung aufweist, ausgewählt aus der Gruppe der Vorrichtungen bestehend aus einem Device Type Manager, einem Field Device Tool, einer Device Description, einer Remote Input/Output Vorrichtung , einem Sensor und einem Aktor.

5. Verfahren nach einem der Ansprüche 2 bis 4, ferner aufweisend:
Erhöhen des Wertes der zweiten Telegrammlänge gegenüber dem Wert der ersten Telegrammlänge um einen vorgebbaren Wert.

6. Verfahren nach einem der Ansprüche 1 bis 5, wobei das Verfahren vor und / oder während einer Nutzdatenübertragung ausgeführt wird.

7. Programmelement zum Ermitteln einer Telegrammlänge zum Kommunizieren zwischen einer Bedienvorrichtung (10) und einem Feldgerät (14, 15, 16) in einem Feldgerätesystem (300, 500), welches Programmelement, wenn es von einem Prozessor ausgeführt wird, folgende Verfahrensschritte steuert:
Zusammenstellen eines ersten Telegramms in der Bedienvorrichtung (10) mit einer vorgebbaren ersten Telegrammlänge;
Versenden des zusammengestellten ersten Telegramms über ein Netzwerk zu dem Feldgerät (14, 15, 16);
Warten auf das Empfangen eines zweiten Telegramms über das Netwerk in der Bedienvorrichtung (10);
Erhöhen der ersten Telegrammlänge um einen vorgebbaren Wert solange bis das Empfangen des zweiten Telegramms fehlschlägt;
Bereitstellen der ersten Telegrammlänge, welche zu einem erfolgreichen Empfangen des zweiten Telegramms geführt hat.

8. Verfahren zum Antworten eines Feldgeräts (14, 15, 16) auf das Empfangen eines ersten Telegramms einer Bedienvorrichtung (10) in einem Feldgerätesystem (300, 500) aufweisend:
Empfangen des ersten Telegramms;
Zusammenstellen eines zweiten Telegramms;
wobei das erste Telegramm eine erste Telegrammlänge aufweist;
wobei das zweite Telegramm eine vorgebbare zweite Telegrammlänge aufweist;
wobei die zweite Telegrammlänge von der ersten Telegrammlänge und/oder einem Typ des ersten Telegramms abhängt;
Versenden des zusammengestellten zweiten Telegramms über ein Netzwerk.

9. Programmelement zum Antworten eines Feldgeräts (14, 15, 16) auf das Empfangen eines ersten Telegramms einer Bedienvorrichtung (10) in einem Feldgerätesystem (300, 500), welches Programmelement, wenn es von einem Prozessor ausgeführt wird, folgende Schritte steuert:
Empfangen des ersten Telegramms;
Zusammenstellen eines zweiten Telegramms;
wobei das erste Telegramm eine erste Telegrammlänge aufweist;
wobei das zweite Telegramm eine vorgebbare zweite Telegrammlänge aufweist;
wobei die zweite Telegrammlänge von der ersten Telegrammlänge und/oder einem Typ des ersten Telegramms abhängt;
Versenden des zusammengestellten zweiten Telegramms über ein Netzwerk.

10. Bedienvorrichtung (10), aufweisend:
eine Quell-Zusammenstelleinrichtung (103);
eine Quell-Versendeinrichtung (104);
eine Quell-Empfangseinrichtung (105);
wobei die Quell-Zusammenstelleinrichtung (103) eingerichtet ist, ein erstes Telegramm mit einer vorgebbaren ersten Telegrammlänge zusammenzustellen;
wobei die Quell-Versendeinrichtung (104) eingerichtet ist, das zusammengestellte erste Telegramm über ein Netzwerk zu einem Feldgerät (14, 15, 16) zu versenden;
wobei die Quell-Empfangseinrichtung (105) eingerichtet ist, auf das Empfangen eines zweiten Telegramms über das Netzwerk zu warten;
wobei die Quell-Zusammenstelleinrichtung (103) eingerichtet ist, die erste Telegrammlänge solange um einen vorgebbaren Wert zu erhöhen, bis das Empfangen des zweiten Telegramms fehlschlägt;
wobei die Quell-Empfangseinrichtung (105) ferner eingerichtet ist, die erste Telegrammlänge bereitzustellen, welche zu einem erfolgreichen Empfangen des zweiten Telegramms geführt hat.

11. Feldgerät (14, 15, 16), aufweisend:
eine Ziel-Empfangseinrichtung (800);
eine Ziel-Zusammenstelleinrichtung (802);
eine Ziel-Versendeinrichtung (801);
wobei die Ziel-Empfangseinrichtung (800) eingerichtet ist, ein erstes Telegramm mit einer ersten Telegrammlänge über ein Netzwerk von einer Bedienvorrichtung (10) zu empfangen;
wobei die Ziel-Zusammenstelleinrichtung (802) eingerichtet ist, ein zweites Telegramm zusammenzustellen;
wobei das zweite Telegramm eine vorgebbare zweite Telegrammlänge aufweist;
wobei die zweite Telegrammlänge von der ersten Telegrammlänge und / oder von dem Typ des ersten Telegramms abhängt;
wobei die Ziel-Versendeinrichtung (801) eingerichtet ist, das zusammengestellte zweite Telegramm über das Netzwerk an die Bedienvorrichtung (10) zu versenden.

12. Feldgerät nach Anspruch 11, wobei die zweite Telegrammlänge gegenüber der ersten Telegrammlänge um einen vorgebbaren Wert länger ist.

13. Feldgerät nach Anspruch 11 oder 12, wobei das Feldgerät (14, 15, 16) zumindest eine Vorrichtung ausgewählt aus der Gruppe der Vorrichtungen bestehend aus einem Sensor, einem Aktor, einem Gateway, einer Steuereinheit, einer Remote I/O, einem Auswertegerät, einem Füllstandssensor, einem Radarsensor, einem Mikrowellensensor, einem Drucksensor, einem Temperatursensor, einem Durchflusssensor und einem Grenzwertsensor ist.

14. Feldgerätesystem (300, 500, 600) zum Ermitteln einer Telegrammlänge zum Kommunizieren zwischen einer Bedienvorrichtung (10) und einem Feldgerät (14, 15, 16) über ein Netzwerk, aufweisend:
eine Bedienvorrichtung (10) nach Anspruch 10;
einem Feldgerät (14, 15, 16) nach Anspruch 11 oder 12;
ein Netzwerk;
wobei die Bedienvorrichtung (10) mit dem Feldgerät (14, 15, 16) über das Netzwerk gekoppelt ist.

## Claims

1. A method for determining a telegram length in an operating apparatus (10) for communicating of telegrams between the operating apparatus (10) and a field device (14, 15, 16) in a field device system (300, 500), the method comprising:
composing a first telegram in the operating apparatus (10) with a predeterminable first telegram length;
despatching the composed first telegram via a network to the field device (14, 15, 16);
waiting for a second telegram to be received, via the network, in the operating apparatus (10);
increasing the first telegram length by a predeterminable value until receiving the second telegram fails;
providing the first telegram length that has resulted in successfully receiving the second telegram.

2. The method according to claim 1, further comprising:
providing the second telegram length as the first telegram length;
wherein the second telegram comprises a predeterminable second telegram length that depends on the first telegram length.

3. The method according to claim 1 or 2, wherein at least one telegram length, selected from the first telegram length and the second telegram length, is at least one telegram length selected from the group of telegram lengths consisting of the length of a bit; the length of a byte; the length of a word; the length of a double word; the length of eight bytes; the length of a float value; the length of an integer value; the length of a query command; and the length of a parameterising command.

4. The method according to any one of claims 1 to 3, wherein at least one apparatus, selected from the operating apparatus (10) and the field device (14, 15, 16), comprises at least one apparatus selected from the group of apparatuses consisting of a device type manager, a field device tool, a device description, a remote input/output apparatus, a sensor and an actuator.

5. The method according to any one of claims 2 to 4, further comprising:
increasing by a predeterminable value the value of the second telegram length relative to the value of the first telegram length.

6. The method according to any one of claims 1 to 5, wherein the method is carried out prior to, and/or during, a transmission of payload data.

7. A program element for determining a telegram length for communicating between an operating apparatus (10) and a field device (14, 15, 16) in a field device system (300, 500), which program element, when executed on a processor, controls the following method-related steps:
composing a first telegram in the operating apparatus (10) with a predeterminable first telegram length;
despatching the composed first telegram, via a network, to the field device (14, 15, 16);
awaiting receipt of a second telegram, via the network, in the operating apparatus (10);
increasing the first telegram length by a predeterminable value until receiving the second telegram fails;
providing the first telegram length that has resulted in successfully receiving the second telegram.

8. A method for a field device (14, 15, 16) responding to the receipt of a first telegram of an operating apparatus (10) in a field device system (300, 500) comprising:
receiving the first telegram ;
composing a second telegram ;
wherein the first telegram comprises a first telegram length;
wherein the second telegram comprises a predeterminable second telegram length;
wherein the second telegram length depends on the first telegram length, and/or on a type of the first telegram ;
despatching the composed second telegram via a network.

9. A program element for a field device (14, 15, 16) responding to the receipt of a first telegram of an operating apparatus (10) in a field device system (300, 500), which program element, when executed on a processor, controls the following steps:
receiving the first telegram ;
composing a second telegram ;
wherein the first telegram comprises a first telegram length;
wherein the second telegram comprises a predeterminable second telegram length;
wherein the second telegram length depends on the first telegram length, and/or on a type of the first telegram ;
despatching the composed second telegram via a network.

10. An operating apparatus (10), comprising:
a source composing device (103);
a source despatching device (104);
a source receiving device (105);
wherein the source composing device (103) is adapted to compose a first telegram with a predeterminable first telegram length;
wherein the source despatching device (104) is adapted to despatch the composed first telegram via a network to a field device (14, 15, 16);
wherein the source receiving device (105) is adapted to wait for the receipt of a second telegram via the network;
wherein the source composing device (103) is adapted to increase the first telegram length by a predeterminable value until receiving the second telegram fails;
wherein the source receiving device (105) is further adapted to provide the first telegram length that has resulted in successfully receiving the second telegram.

11. A field device (14, 15, 16), comprising:
a target receiving device (800);
a target composing device (802);
a despatching device (801);
wherein the target receiving device (800) is adapted to receive a first telegram with a first telegram length via a network from an operating apparatus (10);
wherein the target composing device (802) is adapted to compose a second telegram;
wherein the second telegram comprises a predeterminable second telegram length;
wherein the second telegram length depends on the first telegram length and/or on the type of the first telegram ;
wherein the target despatching device (801) is adapted to despatch the composed second telegram via the network to the operating apparatus (10).

12. The field device according to claim 11, wherein the second telegram length is longer by a predeterminable value than the first telegram length.

13. The field device according to claim 11 or 12, wherein the field device (14, 15, 16) is at least one device selected from the group of devices consisting of a sensor, an actuator, a gateway, a control unit, a remote I/O, an evaluation device, a fill level sensor, a radar sensor, a microwave sensor, a pressure sensor, a temperature sensor, a flow sensor and a limiting value sensor.

14. A field device system (300, 500, 600) for determining a telegram length for communicating between an operating apparatus (10) and a field device (14, 15, 16) via a network, comprising:
an operating apparatus (10) according to claim 10;
a field device (14, 15, 16) according to claim 11 or 12;
a network;
wherein the operating apparatus, (10) is coupled to the field device (14, 15, 16) via the network.

## Revendications

1. Procédé de détermination d'une longueur de télégramme dans un dispositif de commande (10) pour la communication de télégrammes entre le dispositif de commande (10) et un appareil de champ (14, 15, 16) dans un système d'appareils de champ (300, 500), le procédé comprenant :
- la composition d'un premier télégramme dans le dispositif de commande (10), d'une première longueur de télégramme prédéfinissable ;
- l'envoi à l'appareil de champ (14, 15, 16), à travers un réseau, du premier télégramme composé ;
- l'attente de la réception d'un second télégramme, à travers le réseau, dans le dispositif de commande (10) ;
- la hausse de la première longueur de télégramme, d'une valeur prédéfinissable, aussi longtemps que la réception du second télégramme échoue ;
- la préparation de la première longueur de télégramme, qui a mené à une réception concluante du second télégramme.

2. Procédé suivant la revendication 1, comprenant en outre :
- la préparation de la seconde longueur de télégramme en tant que première longueur de télégramme ;
le second télégramme présentant une seconde longueur de télégramme prédéfinissable, qui dépend de la première longueur de télégramme.

3. Procédé suivant l'une des revendications 1 et 2, au moins une longueur de télégramme, sélectionnée parmi la première longueur de télégramme et la seconde longueur de télégramme, étant au moins une longueur de télégramme sélectionnée parmi le groupe des longueurs de télégrammes constituées de la longueur d'un bit, de la longueur d'un byte, de la longueur d'un mot, de la longueur d'un mot double, de la longueur de 8 bytes, de la longueur d'une valeur Float, de la longueur d'une valeur Integer, de la longueur d'un ordre d'appel et de la longueur d'un ordre de paramétrage.

4. Procédé suivant l'une des revendications 1 à 3, au moins un dispositif, sélectionné parmi le dispositif de commande (10) et l'appareil de champ (14, 15, 16), présentant au moins un dispositif sélectionné parmi le groupe des dispositifs constitués d'un Device Type Manager, d'un Field Device Tool, d'une Device Description, d'un dispositif Remote Input/Output, d'un détecteur et d'un acteur.

5. Procédé suivant l'une des revendications 2 à 4, comprenant en outre :
la hausse, d'une valeur prédéfinissable, de la valeur de la seconde longueur de télégramme par rapport à la valeur de la première longueur de télégramme.

6. Procédé suivant l'une des revendications 1 à 5, le procédé étant mis en oeuvre avant et/ou pendant une transmission de données utiles.

7. Elément de programme pour la détermination d'une longueur de télégramme, pour la communication entre un dispositif de commande (10) et un appareil de champ (14, 15, 16) dans un système d'appareils de champ (300, 500), lequel élément de programme, lorsqu'il est réalisé par un processeur, contrôle les étapes de procédé suivantes :
- composition d'un premier télégramme dans le dispositif de commande (10), d'une première longueur de télégramme prédéfinissable ;
- envoi à l'appareil de champ (14, 15, 16), à travers un réseau, du premier télégramme composé ;
- attente de la réception d'un second télégramme, à travers le réseau, dans le dispositif de commande (10) ;
- hausse de la première longueur de télégramme, d'une valeur prédéfinissable, aussi longtemps que la réception du second télégramme échoue ;
- préparation de la première longueur de télégramme, qui a mené à une réception concluante du second télégramme.

8. Procédé de réponse d'un appareil de champ (14, 15, 16) à la réception d'un premier télégramme d'un dispositif de commande (10) dans un système d'appareils de champ (300, 500) comportant:
- réception du premier télégramme ;
- composition d'un second télégramme ;
- le premier télégramme présentant une première longueur de télégramme ;
- le second télégramme présentant une seconde longueur de télégramme prédéfinissable ;
- la seconde longueur de télégramme dépendant de la première longueur de télégramme et/ou d'un type du premier télégramme ;
- envoi du second télégramme composé à travers un réseau.

9. Elément de programme pour la réponse d'un appareil de champ (14, 15, 16) à la réception d'un premier télégramme d'un dispositif de commande (10) dans un système d'appareils de champ (300, 500), lequel élément de programme, lorsqu'il est réalisé par un processeur, contrôle les étapes suivantes :
- réception du premier télégramme ;
- composition d'un second télégramme
- le premier télégramme présentant une première longueur de télégramme ;
- le second télégramme présentant une seconde longueur de télégramme prédéfinissable ;
- la seconde longueur de télégramme dépendant de la première longueur de télégramme et/ou d'un type du premier télégramme ;
- envoi du second télégramme composé à travers un réseau.

10. Dispositif de commande (10) comprenant :
- un dispositif de composition source (103) ;
- un dispositif d'émission source (104) ;
- un dispositif de réception source (105) ;
- le dispositif de composition source (103) étant conçu pour composer un premier télégramme d'une première longueur de télégramme prédéfinissable ;
- le dispositif d'émission source (104) étant conçu pour envoyer à un appareil de champ (14, 15, 16), à travers un réseau, le premier télégramme composé ;
- le dispositif de réception source (105) étant conçu pour attendre la réponse d'un second télégramme à travers le réseau ;
- le dispositif de composition source (103) étant conçu pour élever la première longueur de télégramme d'une valeur prédéfinissable aussi longtemps que la réception du second télégramme échoue ;
- le dispositif de réception source (105) étant par ailleurs conçu pour préparer la première longueur de télégramme, qui a mené à une réception concluante du second télégramme.

11. Appareil de champ (14, 15, 16) comprenant :
- un dispositif de réception cible (800) ;
- un dispositif de composition cible (802) ;
- un dispositif d'émission cible (801) ;
- le dispositif de réception cible (800) étant conçu pour recevoir d'un dispositif de commande (10), à travers un réseau, un premier télégramme d'une première longueur de télégramme ;
- le dispositif de composition cible (802) étant conçu pour composer un second télégramme ;
- le second télégramme présentant une seconde longueur de télégramme prédéfinissable ;
- la seconde longueur de télégramme dépendant de la première longueur de télégramme et/ou du type du premier télégramme ;
- le dispositif d'émission cible (801) étant conçu pour envoyer au dispositif de commande (10), à travers le réseau, le second télégramme composé.

12. Appareil de champ suivant la revendication 11, la seconde longueur de télégramme étant plus longue, d'une valeur prédéfinissable, que la première longueur de télégramme.

13. Appareil de champ suivant l'une des revendications 11 et 12, l'appareil de champ (14, 15, 16) étant au moins un dispositif sélectionné parmi le groupe des dispositifs constitués d'un capteur, d'un acteur, d'une passerelle, d'une unité de commande, d'un Remote I/O, d'un appareil d'évaluation, d'un détecteur de niveau, d'un détecteur radar, d'un détecteur à hyperfréquences, d'un capteur de pression, d'un capteur de température, d'un capteur de débit et d'un capteur de valeur limite.

14. Système d'appareils de champ (300, 500, 600) pour la détermination d'une longueur de télégramme, pour la communication entre un dispositif de commande (10) et un appareil de champ (14, 15, 16) à travers un réseau, comprenant :
- un dispositif de commande (10) suivant la revendication 10 ;
- un appareil de champ (14, 15, 16) suivant l'une des revendications 11 et 12 ;
- un réseau ;
- le dispositif de commande (10) étant couplé à l'appareil de champ (14, 15, 16) à travers le réseau.
